(19) Europäisches Patentamt

European Patent Office

Office européen des brevets

(11) Veröffentlichungsnummer : **0 288 529 B1**

(12) **EUROPÄISCHE PATENTSCHRIFT**

(45) Veröffentlichungstag der Patentschrift :
**20.05.92 Patentblatt 92/21**

(51) Int. Cl.$^5$ : **B01D 15/08,** B01J 20/24

(21) Anmeldenummer : **87907311.2**

(22) Anmeldetag : **19.10.87**

(86) Internationale Anmeldenummer :
**PCT/EP87/00615**

(87) Internationale Veröffentlichungsnummer :
**WO 88/02654 21.04.88 Gazette 88/09**

(54) **VERFAHREN ZUR AUSSCHLUSSCHROMATOGRAPHISCHEN TRENNUNG UND REINIGUNG VON KOLLOIDEN.**

(30) Priorität : **17.10.86 DD 295361**

(43) Veröffentlichungstag der Anmeldung :
**02.11.88 Patentblatt 88/44**

(45) Bekanntmachung des Hinweises auf die
Patenterteilung :
**20.05.92 Patentblatt 92/21**

(84) Benannte Vertragsstaaten :
**DE FR GB IT SE**

(56) Entgegenhaltungen :
**DE-A- 1 792 230**
**DE-A- 3 347 512**
**US-A- 3 002 823**

(73) Patentinhaber : **BOEHRINGER INGELHEIM KG**
**Postfach 200**
**W-6507 Ingelheim am Rhein (DE)**
(84) **DE FR IT SE**

Patentinhaber : **BOEHRINGER INGELHEIM
INTERNATIONAL GmbH
Postfach 20
W-6507 Ingelheim am Rhein (DE)**
(84) **GB**

(72) Erfinder : **EHWALD, Rudolf
Humboldt-Universität
W-1000 Berlin (DE)**
Erfinder : **FUHR, Günter
Humboldt-Universität
W-1000 Berlin (DE)**
Erfinder : **OLBRICH, Matthias
Humboldt-Universität
W-1000 Berlin (DE)**
Erfinder : **GÖRING, Horst
Humboldt-Universität
W-1000 Berlin (DE)**
Erfinder : **KNÖSCHE, Rüdiger
Humboldt-Universität
W-1000 Berlin (DE)**
Erfinder : **KLEINE, Rolf
Humboldt-Universität
W-1000 Berlin (DE)**

EP 0 288 529 B1

Jouve, 18, rue Saint-Denis, 75001 PARIS

## Beschreibung

Anwendungsgebiet der Erfindung. Die Erfindung betrifft ein Verfahren zur Herstellung von vesikulärem Trägermaterial nach dem Oberbegriff von Anspruch 1. Die Erfindung betrifft ferner ein Verfahren zur ausschlußchromatographischen Trennung und Reinigung kolloidaler Stoffe an gemäß dem Verfahren nach Anspruch 1 hergestellten Füllkörpern. Es ist vor allem für die präparative Reinigung von polymeren Stoffen, z. B. Eiweißen, geeignet.

Charakterisitik des bekannten Standes der Technik Die Erfindung baut auf den besonderen Eigenschaften und Vorteilen vesikulärer Trenn-, Füll- und Trägermaterialien, die im folgenden als vesikuläre Füllkörper bezeichnet werden auf. Vesikuläre Füllkörper, ihre Herstellung durch Extraktion abgetöteter Pflanzenzellen oder Zellaggregate und ihre Anwendbarkeit in der Ausschlußchromatographie sind bekannt [Ehwald, R. und Fuhr, G. OS DE 3347512 $A_1$, 1987]. Sie sind im Unterschied zu den üblicherweise in der Ausschlußchromatographie eingesetzten Gelpartikeln aus Hohlkörpern mit dünner, poröser Wand aufgebaut. Extrahierte, durch Suspensionskultur aus Geweben höherer Pflanzen erzeugte Zellaggregate können als Füllkörper in der Säulenchromatographie eingesetzt werden und ermöglichen eine Gruppentrennung nach der größenabhängigen Permeationsfähigkeit gelöster Teilchen. Kennzeichnend hierfür ist das Fehlen des für die Gelchromatographie unvermeidlichen Fraktionierungsbereiches [vgl. Determann, H., Gelchromatographie, Springer-Verlag, Berlin, Heidelberg, New York, 1967] und eine scharfe Abgrenzung der permeationsfähigen von den ausgeschlossenen Probebestandteilen in Form einer idealen Gruppentrennung [Ehwald, R., Fuhr, G. und Olbrich, H., Gruppentrennung durch chromatographische Dialyse an pflanzlichen Zellwänden, Chemische Technik 37. S. 400, 1985]. Ein Nachteil der bekannten Verfahren zum chromatographischen Einsatz pflanzlicher Gewebeteilchen ist der hohe Gehalt des Materials an nicht extrahierbaren Protoplasmaresten. Er führt zu komplexen Adsorptionserscheinungen und bringt Einschränkungen hinsichtlich der Elutionsmittel mit sich. Der bisher bekannte Anwendungsbereich vesikulärer, aus Pflanzenzellen aufgebauter chromatographischer Füllkörper in der Ausschlußchromatographie ist aber vor allem dadurch begrenzt, daß nur zwei Stoffgruppen (entsprechend einer Ausschlußgrenze von etwa 5 nm) voneinander getrennt werden können.

Ziel der Erfindung Das Ziel der Erfindung besteht in der Bereitstellung eines breit anwendbaren und ökonomischen Verfahrens zur präparativen Reinigung von Kolloiden, vor allem von Eiweißen, das es ermöglicht, Stoffe mit geringeren Unterschieden in der Teilchengröße ausschlußchromatographisch sicher und effektiv voneinander zu trennen.

Die Aufgabe besteht darin, vesikuläres Trägermaterial, das durch Extraktion aus pflanzlichen Gewebeteilchen hergestellt wurde, bezüglich der Ausschlußgrenze so zu verändern und chromatographisch als Füllkörper so einzusetzen, daß ein breites Spektrum präparativer Kolloidtrennungen mit unterschiedlicher Ausschlußgrenze und hoher Selektivität nach dem Ausschlußprinzip durchführbar wird.

Diese Aufgabe wird erfindungsgemäß durch die in den kennzeichnenden Teilen der Ansprüche 1 beziehungsweise 4 angegebenen Merkmale gelöst.

Das Verfahren nutzt den Befund, daß die störenden unlöslichen Protoplasmareste enzymatisch abgebaut, solubilisiert und extrahiert werden können, ohne die vesikuläre Struktur der Gewebeteilchen mechanisch zu zerstören oder die Ultrafilter-Wirkung der Zellwand hinsichtlich der Ausschlußgrenze zu verändern. Die Möglichkeit hierzu wurde im Einsatz bestimmter proteolytischer Enzympräparate gefunden.

Sie beruht darauf, daß die wirksamen Enzymmoleküle ein relativ geringes Molekulargewicht aufweisen und durch die native Zellwand permeieren. Vorzugsweise werden zum enzymatischen Abbau der Protoplasmareste preiswerte Pankreas-Präparate eingesetzt. Es sind jedoch grundsätzlich andere Präparate geeignet, z. B. solche, die Subtilisin oder Papain enthalten. Ihre Zahl erhöht sich, wenn auf eine niedrige Ausschlußgrenze kein besonderer Wert gelegt wird und vor Einwirkung des Enzympräparats die Ausschlußgrenze der Zellwandvesikeln durch partielle Pektinextraktion vergrößert werden kann. Der Erfindungsanspruch wird daher nicht auf die in Beispiel 1 erläuterte Verwendung von Pankreas-Enzymen beschränkt.

Erfindungsgemäß wird die Ausschlußgrenze der nativen Zellwand durch partiellen, nach bekannten chemischen Prinzipien möglichen Entzug von Anteilen des Protopektins graduell und definiert vergrößert, wobei die Semipermeabilität für Kolloide und die mechanische Stabilität der Füllkörper erhalten bleiben. Hierzu werden die Gewebeteilchen vorübergehend in ein Medium gebracht, das die Ablösung von Pektinstoffen aus der primären Zellwand induziert. Bekanntlich wird die Abspaltung und Extraktion der Pektinstoffe aus der Zellwand durch die Ablösung der komplex sehr fest gebundenen mehrwertigen Kationen, vor allem Calcium-Ionen, bei höherer Temperatur durch die Anwendung verdünnter Säure (Hydrolyse) oder bereits bei Zimmertemperatur durch hohen pH-Wert und hohe Salzkonzentrationen (β-Eliminierung) erreicht. Aus der Literatur [z. B. Pilnick, W. und Voragen, A. G., polysacharides and Food, Goordian 84/9, 166-171, 1984] sind verschiedene Möglichkeiten für einen langsamen, kontrollierbaren Protopektinabbau ableitbar. Daher wird der Erfindungsanspruch nicht auf die in den Beispielen 1 und 2 dargestellten konkreten Verfahrensweisen begrenzt.

In Beispiel 1 wird dargestellt, daß die Ausschlußgrenze der vesikulären Füllkörper mit zunehmender Einwirkungsdauer einer alkalischen EDTA-haltigen Pufferlösung graduell vergrößert wird. Die Kontrolle über diese Veränderung der Ausschlußgrenze erfolgt erfindungsgemäß durch anschließende Chromatographie von im Polymerisationsgrad uneinheitlichen, in der Teilchengrößenzusammensetzung definierten Polymeren. Es werden vorzugsweise handelsübliche Dextranpräparationen verwendet. Jedoch sind auch andere Testpolymere mit entsprechender Molekülgrößenverteilung, z. B. Polyethylenglykole, geeignet. Die mit Pektinextraktion verbundene Vergrößerung der Ausschlußgrenze ermöglicht selektive Trennungen nach dem Ausschlußprinzip auch zwischen größeren Proteinen und Kolloiden, die von der nativen Zellwand ausgeschlossen werden, z. B. die Trennung zwischen Aldolase und Hömoglobin (Beispiel 1) oder die Spaltung von Blue Dextran in zwei Fraktionen (Beispiel 2).

Erfindungsgemäß kann auch eine reversible Veränderung der Ausschlußgrenze an den aus pflanzlichen Gewebeteilchen hergestellten Füllkörpern chromatographisch genutzt werden. Sie beruht auf Dehydratisierung und amit verbundene Entquellung den im Zellulosegerüst verankerten Protopektingels und läßt sich durch Zumischung verschiedener organischer Flüssigkeiten zum wäßrigen Eluationsmittel erreichen. Da die Entquellung des Protopektine wegen seiner Einbettung in das Netzwerk der Zellulose-Fibrillen nicht gleichmäßig erfolgen kann, entstehen größere Freiräume zwischen den Fibrillen, so daß größere Teilchen permeationsfähig werden. Außerdem wird durch Zumischung einer organischen Flüssigkeit wie Ethanol zum wäßrigen Lösungsmittel auch eine Verringerung des Stokesschen Durchmessers stark hydrophiler Kolloide erreicht. Beide Effekte wirken zusammen, wenn Mathanol und Ethanol in ausreichender Konzentration (> 8% bei Ethanol, > 12% bei Methanol) eine deutlich reversible Vergrößerung der Ausschlußgrenze für Dextran, bezogen auf die Molmasse, bewirken. Die in beispiel 3 genannten einfachen Alkohole sind nicht die einzigen mit Wasser mischbaren organischen Flüssigkeiten, die entquellend auf die Hydrokolloide der Probe und der Zellwand wirken. Die Erfindung betrifft auch den in der Wirkung gleichen Einsatz anderer organischer Flüssigkeiten wie den wasserlöslicher Ketone, Nitrile, Ether, Amine oder organischer Säuren. Das hier dargestellte Verfahren, die Ausschlußgrenze der vesikulären Füllkörper durch Zumischung einer organischen Flüssigkeit zum Elutionsmittel reversibel zu vergrößern, kann zur Herstellung einheitlicher Polymerenfraktionen effektiv ausgenutzt werden. Er wird möglich, weil die entquellende Wirkung der organischen Flüssigkeit auf die Hydrokolloide der Zellwand und der Probe nicht mit einem störenden Schrumpfen bzw. einer Verdichtung des vesikulär aufgebauten Füllkörpers verbunden ist. Selbst reine organische Flüssigkeiten wie Ethanol oder Methanol können problemlos als Elutionsmittel verwendet werden, wenn enzymatisch gereinigte Gewebeteilchen eingesetzt werden. Ethanollösliche Stoffe werden an ethanolgesättigten Packungen in Form scharfer Banden eluiert. Trennstufenhöhen von etwa 1 mm können dabei leicht erreicht werden.

Erfindungsgemäß wird die permeabilitätsbestimmende Rolle des Protopektins genutzt, um die Ausschlußgrenze der Füllkörper für bestimmte Kolloide, vor allem Proteine, selektiv und reversibel zu verändern. Bei Verwendung von Lösungen mit geringer Ionenstärke werden stark negativ geladene Proteine ausgeschlossen und mit dem Totvolumen der Säule eluiert, während ungeladene oder schwächer geladene Teilchen gleicher oder ähnlicher Größe mit dem vollen Packungsvolumen in der permeationsfähigen Fraktion eluiert werden (Beispiel 4). Daher können, wie in Beispiel 4 dargestellt wird, auch solche Proteine präparativ auf kurzen Trennstrecken voneinander getrennt werden, die sich in der Ladung deutlich, in der Größe aber wenig oder nicht unterscheiden. Da die Ladung amphoterer Kolloide durch den pH-Wert, der Wirkungsbereich der Ladung durch die Ionenstärke bestimmt wird, läßt sich die Zuordnung bestimmter Kolloide zur ausgeschlossenen oder zur permeationsfähigen Fraktion selektiv bestimmen.

Abschließend sollen die Vorteile des in dieser Erfindung dargestellten Verfahrens im Vergleich mit bekannten ausschlußchromatographischen Verfahren zur Reinigung von Kolloiden kurz zusammengefaßt werden. Ein bereits bekannter Vorteil gegenüber der Gelchromatographie besteht darin, daß verschiedene Kolloide selbst bei geringen Unterschieden in der Teilchengröße mit einem großen Unterschied im relativen Elutionsvolumen getrennt werden können [Ehwald, R., Fuhr, G. und M. Olbrich, Gruppentrennung durch chromatographische Dialyse an pflanzlichen Zellwänden, Chem. Technik 37, S. 400, 1985]. Das hier dargestellte Verfahren ermöglicht eine breite Ausnutzung dieses Vorteile für präparative Kolloidtrennungen. Neben den mit Entfernung der störenden Protoplasmareste verbundenen vorteile (verbesserte Packfähigkeit, Vermeidung störender Adsorption, verbesserte Lösungsmittelfestigkeit und Resistenz gegen hydrolytische Enzyme) ergeben sich durch das erfindungsgemäße Verfahren vorteilhafte Erweiterungen des bekannten Anwendungsgebietes der vesikulären Füllkörper in der Ausschlußchromatographie:

a) Die Ausschlußgrenze kann graduell und irreversibel mit geringem technischen Aufwand vergrößert werden.

b) Die Ausschlußgrenze für wichtige Hydrokolloide graduell und reversibel vergrößert werden.

c) Die Ausschlußgrenze kann für bestimmte amphotere Kolloide, vor allem für Proteine, selektiv und reversibel verändert werden.

d) Es können organische Elutionsmittel eingesetzt werden.

Das erfindungsgemäße Verfahren ermöglicht es, die Ausschlußgrenze von bei der Chromatographie verwendbaren, aufbereiteten vesiculärem Material durch die Temperatur der Enzymbehandlung und/oder die Konzentration der Base und/oder die Dauer der vorgenannten Behandlungsschritte zu vergrößern.

Eine Variation der genannten Parameter ermöglicht es dem Fachmann, ausgehend von einem einzigen standardisiertem vesikulärem Material, ein optimal auf das spezifische Trennproblem eingestellbares Säulenmaterial zu erhalten.

6. Ausführungsbeispiele

Beispiel 1

Zellkomplexe einer Suspensionskultur von Chenopodium album mit einem mittleren Durchmesser von ungefähr 250 um [vgl. Ehwald, R. und G, Fuhr, OS DE 3347512 A₁, 1984] werden mit 96 % Ethanol entwässert, mit reiner Essigsäure und anschließend mit Aqua dest gewaschen. Danach werden die Gewebeteilchen 2 Tage lang bei Zimmertemperatur in 0,05 M Phosphatpuffer pH 7 mit einem Zusatz von 0,1 % Trypsin zur Zellzucht (Firma Belger, Klein Machnow, DDR) und 0,1 % $NaN_3$ inkubiert. Dabei lösen sich die sichtbaren Protoplasmareste in den Zellen auf. Anschließend werden die Gewebeteilchen mit Aqua dest gewaschen, in Elutionspuffern (0,01 - 0,1 M) Phosphatpuffer pH 5 - 7,5) suspendiert und in Chromatrographiesäulen dicht gepackt. Es werden Packungen mit Längen von 6 - 10 cm und Durchmesser von 0,5 - 3,8 cm verwendet. Eine gleichmäßige, dichte Packung wird erreicht, wenn das Elutionsmittel mit einer Lineargeschwindigkeit von etwa 3mm $min^{-1}$ einige Zeit nach dem Sedimentieren der Füllkörper durch die Packung gedrückt oder gesaugt wird. Hierzu reichen Druckdifferenzen unter 0,05 MPa aus. Während der chromatographischen Trennung war die Packung mit Filterpapier abgedeckt, die Lineargeschwindigkeit der Elution, bezogen auf den gesamten Säulenquerschnitt betrug 0,5 - 2,5 $mm^{-1}$. Als Detektoren wurden 1. ein Perkin-Elmer-polarimeter 141,2. ein UV-Detektor Unicord II (LKB) und 3. ein 78977 A RI-Detector (Hewlett Packard) eingesetzt. Mit diesen Detektoren wurden keine signifikanten Veränderungen der Grundlinien bei Verwendung von Phosphatpuffern, Ethanol, Methanol oder Ethanol-Wasser-Gemischen festgestellt. An den genannten 6 - 10 cm langen Säulen ist eine vollständige ausschlußchromatographische Trennung ausgeschlossener größerer Kolloide (Dextrane, Polyethylenglykole) von niedermolekularen Stoffen (Zucker, Salzen, Farbstoffen) und auch kleineren Kolloiden (Inulin, Trypsin u. a. Proteine) möglich. Dextran 15 und Dextran 35 (kommerzielle Präparate mit einem gewissen Spektrum der Molmasse, Firma SERVA, Heidelberg, BRD) werden in 2 Hauptfraktionen gespalten. Das Elultionsprofil von Dextranen eignet sich zur Feststellung der Ausschlußgrenze. Aus der Rechromatographie der beiden durch die vesikulären Füllkörper voneinander getrennten Anteile des Dextrans 15 an einem geeichten Sephadexgel (G 75 superfine) läßt sich ableiten, daß die Ausschlußgrenze der vesikulären Füllkörper bei etwa 5 nm liegt, wenn reines Wasser oder Phosphatpuffer als Elutionsmittel eingesetzt wird. Eine Veränderung der Ausschlußgrenze durch die Behandlung mit dem pankreatischen Enzympräparat "Trypsin zur Zellzucht" ist nicht nachzuweisen; die von Protoplasmaresten befreiten Füllkörper zeichnen sich jedoch durch eine verbesserte Trennschärfe und Packungsqualität aus. Für niedermolekulare Bestandteile der permeationsfähigen Fraktion lassen sich Trennstufenhöhen unter 0,5 mm erreichen.

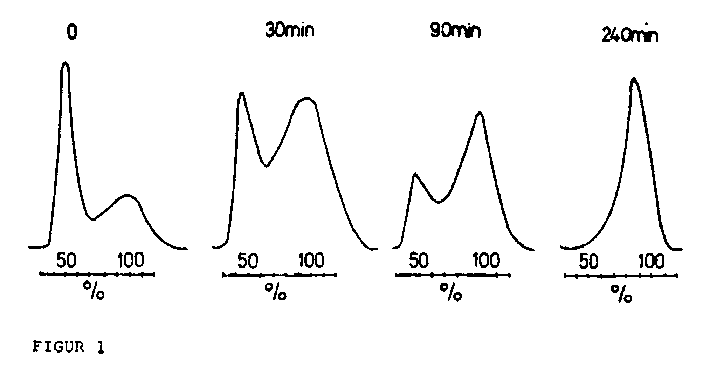

Die mit Trypsin zur Zellzucht gereinigten Gewebeteilchen wurden bei Zimmertemperatur in einer alkalischen gepufferten Salzlösung (0,05 M Glycinpuffer pH 10/5 mM EDTA/ 0,5 M NaCl für die Dauer unterschiedlicher Zeiträume geschüttelt, anschließend über ein Nylontuch abgefiltert, mit Aqua dest nachgewaschen und in eine gerührte 10 mM $CaCl_2$-Lösung gegeben. Danach wurde die Veränderung dar Ausschlußgrenze durch Chromatographie von Dextran 35 und Dextran 60 registriert. Dies wird in Figur 1 verdeutlicht.

Figur 1:

Vergrößerung der Ausschlußgrenze der vesikulären Füllkörper mit zunehmender Dauer der Pektinextraktion, dargestellt an der chromatographischen Spaltung des Dextran 35 in die permetionsfähige Fraktion (Peak bei 90 - 100 % des Packungsvolumens) und die ausgeschlossene Fraktion (Peak bei 40 - 50 % des Packungsvolumens). Zeitangabe über den Chromatogrammen: Einwirkungsdauer des alkalischen EDTA-Puffers, Prozentangabe unter den Chromatogrammen: Elutionsvolumen in Prozent des Packungsvolumens. Säulendurchmesser 2,5 cm, Packungshöhe 7 - 10 cm, Elultionsmittel: 0,1 M Phosphatpuffer pH 7, lineare Elutionsgeschwindigkeit ca. 2 mm $min^{-1}$ bezogen auf den gesamten Säulenquerschnitt, Detektor: Perkin-Elmer-Polarimeter 141 M.

Aus der in Figur 1 dargestellten Verringerung des ausgeschlossenen Anteils an Dextran 35 nach Pektinextraktion ist die Vergrößerung der Ausschlußgrenze ableitbar.

Sie läßt sich in der geschilderten Weise durchführen, ohne daß die Einheitlichkeit der Vesikeln hinsichtlich ihrer Ausschlußgrenze verlorengeht. Der Charakter der für die Ausschlußchromatographie mit vesiklären Füllkörpern typischen idealen Gruppentrennung mit sehr engem Fraktionierungsbereich bleibt erhalten. Daher können sehr selektive ausschlußchromatographische Proteintrennungen in verschiedenen Größenbereichen des Molekulargewichts durchgeführt werden.

Tabelle 1:

Zuordnung von Proteinen zur permeationsfähigen (+) oder zur ausgeschlossenen (-) Fraktion bei der Chromatographie mit vesikulären Füllkörpern, die für unterschiedliche Dauer mit der genannten alkalischen gepufferten Salzlösung behandelt wurden. +/-: permeationsfähig bei pH 5 bei hoher Ionenstärke (0,3 M NaCl) und ausgeschlossen in 0,03 M Phosphatpuffer pH 7.

| Protein | Molmasse | Dauer der Einwirkung der Extraktionslösung | | |
|---|---|---|---|---|
| | | 0 | 90 | 300 min |
| Cytochrom 6 | 12200 | + | + | + |
| Rindertrypsin | 23300 | + | + | + |
| Elastase I | 25800 | + | + | + |
| alkalische Proteinase | 28000 | + | + | + |
| Malatdehydrogenase, Monomer | 33500 | + | + | + |
| Thermolysin | 34500 | + | + | + |
| Carboxypeptidase vom Rind | 34400 | + | + | + |
| Pepsin vom Schwein | 35500 | – | +/– | + |
| Ovalbumin | 43000 | – | +/– | + |
| Rinderhämoglobin | 64400 | – | + | + |
| Humanserumalbumin | 67700 | – | – | + |
| Aldolase | 160000 | – | – | + |
| Ferritin | 450000 | – | – | – |

Beispiel 2

Wie in Beispiel 1 beschrieben, wurden die Gewebeteilchen mit Trypsin behandelt. Dann wurden sie mit dem 3-fachen ihres Volumens an 0,1 M EDTA-Lösung auf einem Nylontuch gewaschen und anschließend 48 h lang im etwa 5-fachen ihres Volumens an 4 % KOH bei Zimmertemperatur geschüttelt. Nach Abwaschen der Lauge durch Filtration auf Nylontuch wurden die Gewebeteilchen in eine 10 mM CaCl$_2$-Lösung gerührt mit Aqua dest nachgewaschen und wie in Beispiel 1 dargestellt, zur Chromatographie eingesetzt. Die Ausschlußgrenze der KOH behandelten Füllkörper (nach vollständiger Extraktin der Pektinstoffe) ist soweit vergrößert, daß nun Blue Dextran mit einer mittleren Molmasse von 2000 kD fraktioniert wird. An den in der beschriebenen Weise behandelten Füllkörpern wird Clykogen ausgeschlossen; Ferritin mit einem Molekulargewicht von etwa 450 kD wird dagegen in der permeationsfähigen Fraktion (über 90 % des Packungsvolumens) eluiert.

Beispiel 3

Die Gewebeteilchen wurden, wie in Beispiel 1 beschrieben, mit Trypsin behandelt. Anschließend wurden sie zur Chromatographie eingesetzt (vgl. Beispiel 1), wobei zum Packen der Säule und auch als Elutionsmittel Gemische aus Phosphatpuffer und Alkoholen eingesetzt wurden, die zuvor durch das Vakuum einer Wasserstrahlpumpe gut entgast wurden. Die Ausschlußgrenze der Zellwandvesikeln für Dextranmoleküle wird durch Zumischung von Methanol und in noch stärkerem Maße durch Zumischung von Ethanol vergrößert. Dies zeigt sich daran, daß der Anteil der permeationsfähigen Moleküle des Dextran 35 bzw. des Dextran 60 im alkoholhaltigen Puffer wesentlich vergrößert wird. Der Einfluß der untersuchten organischen Flüssigkeiten ist vollkommen reversibel. Ethanol und Methanol können an den verwendeten Füllkörpern in jedem Mischungsverhältnis mit Wasser eingesetzt werden, wobei in allen Fällen eine gute Packungsqualität erreichbar ist. Bei Verringerung der Alkoholkonzentration ist ein erneutes Packen der Säulen nicht erforderlich.

Beispiel 4

Die Ausschlußgrenze der Zellwandvesikeln wurde, wie in Beispiel 1 erläutert, durch 90 min Einwirkung des EDTA-Puffers vergrößert. Wird als Elutionsmittel bei der anschließend durchgeführten Chromatographie 0,03 M Phosphatpufer pH 7 verwendet, beträgt das Elutionsvolumen des Rinderhämoglobins (pK = 6,7, M = 64,4 kD) etwa 90 bis 95 % des Packungsvolumens, dasjenige des Ovalbumins (pK = 5,5, M = 43 kD) bleibt dagegen bei 45 bis 55 %. Unter den genannten Bedingungen wird Hämoglobin in der permentionsfähigen Fraktion, Ovalbumin dagegen in der ausgeschlossenen Fraktion eluiert, obwohl letzteres das geringere Molekulargewicht besitzt. Die Ursache für diese scheinbare Anomalie ist die stark negative Ladung des Ovalbumins, die sich hemmend auf seine Permeation durch das negativ geladene Protopektingel der Zellwand auswirkt. Eluiert man das Ovalbumin am gleichen Material bei pH 5 in 0,3 M NaCl, wird sein Peak wie der des Hämoglobins bei 90 bis 95 % des Packungsvolumens registriert (vgl. Tabelle 1, Beispiel 1).

## Patentansprüche

1. Verfahren zur Herstellung von vesikulärem Trägermaterial für die Ausschlußchromatographie, aus extrahierbaren Gewebeteilchen höherer Pflanzen vorzugsweise in Suspensionskultur gewachsenen Zellaggregaten dadurch gekennzeichnet, daß die Gewebeteilchen mit einem die Protoplasmareste solubilisierenden Enzympräparat behandelt werden und vor oder nach der genannten Enzymbehandlung aus dem zellwandgebundenen Protopektin der gennanten Gewebeteilchen, zur Vergrößerung der Ausschlußgrenze des Trägermaterials, durch (vorzugsweise basenkatalysierten) Abbau der Polygalacturonsäureketten in kontrolliertem Ausmaß und durch (vorzugsweise ionenabhängige) Pektinsolubilisierung Pektinstoffe abgespalten und extrahiert werden.

2. Verfahren nach Anspruch 1, dadurch gekennzeichnet, daß das Ausmaß des Protopektinabbaus und der damit verbundenen Vergrößerung der Ausschlußgrenze durch die Dauer der Extraktion der Gewebeteilchen mit einer alkalisch reagierenden Salzlösung bestimmt wird.

3. Verfahren nach Anspruch 1, dadurch gekennzeichnet, daß das Ausmaß des Protopektinabbaus und der damit verbundenen Vergrößerung der Ausschlußgrenze durch die Tempertur der Enzymbehandlung und/oder die Konzentration der Base und/oder die Dauer der vorgenannten Behandlungsschritte bestimmt wird.

4. Verfahren zur ausschlußchromatographischen Trennung und Reinigung von Verbindungen, insbesondere von Kolloiden, dadurch gekennzeichnet, daß ein gemäß dem Verfahren nach Anspruch 1 hergestelltes Trägermaterial als Füllkörper in wasser, einer wäßrigen Lösung oder einer organischen Flüssigkeit suspendiert und als stationäre Phase zur chromatographischen Trennung permeationsfähiger Stoffe von augeschlossenen Stoffen kolloidhaltiger Proben eingesetzt wird.

5. Verfahren nach Anspruch 4, dadurch gekennzeichnet, daß die Ausschlußgrenze der als Füllkörper genutzten Gewebeteilchen für wasserlösliche Kolloide durch Zumischung einer organischen mit Wasser mischbaren Flüssigkeit zum wäßrigen Elutionsmittel reversibel vergrößert wird.

6. Verfahren nach Anspruch 4, dadurch gekennzeichnet, daß bestimmte potentiell permeationsfähige amphotere Kolloide durch die Wahl des pH-Wertes und/oder der Ionenstärke des Elutionsmittels so stark negativ aufgeladen werden, daß sie selektiv von den als Füllkörper genutzten Gewebeteilchen ausgeschlossen werden.

7. Verfahren nach Anspruch 4, dadurch gekennzeichnet, daß die Ausschlußgrenze der als Füllkörper genutzten Gewebeteilchen chromatographisch durch quantitative Bestimmung der permeablen und der aus-

EP 0 288 529 B1

geschlossenen Bestandteile eines im polymerisationsgrad nicht einheitlichen Stoffes mit definierter Molekülgrößenverteilung kontrolliert wird.

## Claims

1. Process for the preparation of vesicular carrier material for exclusion chromatography from extractable tissue particles of higher plants, preferably cell aggregates grown in suspension culture, characterised in that the tissue particles are treated with an enzyme preparation which solubilises the protoplasm residues, and before or after the above-mentioned enzyme treatment, in order to increase the exclusion limit of the carrier material, pectin is split off and extracted from the protopectin bound in the cell walls of the above-mentioned tissue particles by (preferably base-catalysed) degradation of the polygalacturonic acid chains to a controlled degree and by (preferably ion-dependent) pectin solubilisation.

2. Process according to claim 1, characterised in that the degree of protopectin degradation and the consequent increase in the enclusion limit is determined by the duration of extraction of the tissue particles with an alkaline-reacting saline solution.

3. Process according to claim 1, characterised in that the degree of protopectin degradation and the consequent increase in the exclusion limit is determined by the temperature of the enzyme treatment and/or the concentration of the base and/or the duration of the above-mentioned treatment steps.

4. Process for the separation and purification of oompounds, especially colloids, by exclusion chromatography, characterised in that a carrier material prepared by the process according to claim 1, as the filler, is suspended in water, an aqueous solution or an organic liquid and is used as the stationary phase in the chromatographic separation of permeating substances from excluded substances in colloid-containing samples.

5. Process according to claim 4, characterised in that the exclusion limit of the tissue particles used as fillers for water-soluble colloids is reversibly increased by mixing an organic, water-miscible liquid with the aqueous eluant.

6. Process according to claim 4, characterised in that certain potentially permeating amphoteric colloids are so strongly negatively charged by the choice of pH and/or the ionic strength of the eluant that they are selectively excluded by the tissue particles used as filler.

7. Process according to claim 4, characterised in that the exclusion limit of the tissue particles used as fillers is monitored chromatographically by quantitatively determining the permeating and the excluded constituents of a substance with a defined molecular size distribution but a non-uniform degree of polymerisation.

## Revendications

1. Procédé de préparation d'un matériau support vésiculaire pour chromatographie d'exclusion à partir de particules de tissu extractibles de végétaux supérieurs, de préférence d'agrégats cellulaires développés en culture en suspension, caractérisé en ce que les particules de tissu sont traitées avec une préparation enzymatique qui solubilise les restes de protoplasme et en ce que, pour augmenter la limite d'exclusion du matériau support, les substances pectiques sont séparées et extraites avant ou après ledit traitement enzymatique à partir de la protopectine desdites particules de tissu qui est liée à la paroi cellulaire, par dégradation (de préférence catalysée par une base) des chaînes d'acide polygalacturonique dans une mesure contrôlée et par solubilisation (de préférence fonction des ions) de la pectine.

2. Procédé selon la revendication 1, caractérisé en ce que l'ampleur de la dégradation de la protopectine et de l'augmentation de la limite d'exclusion qui est liée à celle-ci est déterminée par la durée de l'extraction des particules de tissu avec une solution saline à réaction alcaline.

3. Procédé selon la revendication 1, caractérisé en ce que l'ampleur de la dégradation de la protopectine et de l'augmentation de la limite d'exclusion qui est liée à celle-ci est déterminée par la température du traitement enzymatique et/ou la concentration de la base et/ou la durée des étapes de traitement citées précédemment.

4. Procédé de séparation et de purification de composés, en particulier de colloïdes, par chromatographie d'exclusion, caractérisé en ce qu'un matériau support préparé selon le procédé de la revendication 1 est mis en suspension comme corps de remplissage dans l'eau, une solution aqueuse ou un liquide organique et est utilisé comme phase stationnaire pour la séparation chromatographique de substances susceptibles de perméation et de substances exclues d'échantillons contenant des colloïdes.

5. Procédé selon la revendication 4, caractérisé en ce que la limite d'exclusion des particules de tissu uti-

7

lisées comme corps de remplissage pour des colloïdes hydrosolubles est augmentée de manière réversible par mélange à l'éluant aqueux d'un liquide organique miscible à l'eau.

6. Procédé selon la revendication 4, caractérisé en ce que des colloïdes amphotères potentiellement susceptibles de perméation sont chargés négativement si fortement grâce au choix du pH et/ou de la force ionique de l'éluant qu'ils sont exclus de manière sélective des particules de tissu utilisées comme corps de remplissage.

7. Procédé selon la revendication 4, caractérisé en ce que la limite d'exclusion des particules de tissu utilisées comme corps de remplissage est contrôlée par voie chromatographique par détermination quantitative des composants perméables et des composants exclus d'une substance de degré de polymérisation non uniforme et de répartition définie des tailles de molécules.

FIGUR 1